Europäisches Patentamt

European Patent Office

Office européen des brevets

(19)

(11) Veröffentlichungsnummer: **0 284 641**
**B1**

(12) **EUROPÄISCHE PATENTSCHRIFT**

(45) Veröffentlichungstag der Patentschrift:
18.10.89

(51) Int. Cl.⁴: **A 61 C  17/04**

(21) Anmeldenummer: 87104894.8

(22) Anmeldetag: 02.04.87

(54) Vorrichtung zur Aufnahme und zum Trennen von insbesondere in Zahnarztpraxen anfallenden und im Bohrschlamm od.dgl. enthaltenen Schadstoffen aus Metallverbindungen enthaltenden Zahnfüllmaterialien.

(43) Veröffentlichungstag der Anmeldung:
05.10.88 Patentblatt 88/40

(45) Bekanntmachung des Hinweises auf die Patenterteilung:
18.10.89 Patentblatt 89/42

(84) Benannte Vertragsstaaten:
AT BE CH DE ES FR GB GR IT LI LU NL SE

(56) Entgegenhaltungen:
EP-A- 0 023 036
EP-A- 0 102 000
EP-A- 0 108 983
EP-A- 0 211 808
DE-A- 2 163 501
DE-B- 1 930 085
DE-U- 7 404 214
DE-U- 7 425 087
US-A- 1 602 343
US-A- 3 612 089

(73) Patentinhaber: ALP GmbH, Ness 1,
D-2000 Hamburg 11 (DE)

(72) Erfinder: Alkirk, Jim, Claus-Ferck-Str. 10,
D-2000 Hamburg 67 (DE)

(74) Vertreter: Richter, Werdermann & Gerbaulet, Neuer
Wall 10, D-2000 Hamburg 36 (DE)

ACTORUM AG

## Beschreibung

Die Erfindung betrifft eine Vorrichtung zur Aufnahme von partikelförmigen Schadstoffen und zum Trennen von Wasser und partikelförmigen Schadstoffen nach dem ersten Teil von Anspruch 1.

Der in Zahnarztpraxen anfallende Bohrschlamm und mit dem Patientenmundspülwasser mitgeführtes Material von entfernten amalgamhaltigen Zahnfüllungen, die Metallverbindungen, insbesondere auch Quecksilberverbindungen, enthalten, werden zusammen mit dem Arbeitswasser, welches zum Spülen und als Kühlmittel während des Bohrvorganges dem Mund des Patienten zugeführt wird, in den Abwasserkanal abgeleitet und gelangen somit in die Abwässer. Die jährlich den Abwässern auf diesem Wege zugeführten Mengen an schädlichen Metallverbindungen, insbesondere Quecksilberverbindungen, die aus den Zahnarztpraxen anfallen, sind erheblich und tragen zu einer Umweltbelastung bei, zumal es schwierig oder überhaupt nicht möglich ist, diese schädlichen Metallverbindungen bei der Aufbereitung der Abwässer zu Brauchwasser aufzuarbeiten und zu beseitigen.

Die Erfindung geht von einer Vorrichtung zur Aufnahme von partikelförmigen Schadstoffen und zum Trennen von Wasser und partikelförmigen Schadstoffen, insbesondere von in Zahnarztpraxen anfallenden, im Bohrschlamm von Zahnfüllmaterialien od.dgl. enthaltenen partikelförmigen Schadstoffen aus Metallverbindungen gemäss der eingangs beschriebenen Art aus. Eine solche Vorrichtung ist durch die US-A-1 602 343 bekannt. Diese Vorrichtung besteht aus einem zylindrischen, bodenseitig fest und obenseitig mittels einer aufschraubbaren Abdeckplatte verschlossenen Behälter, der oben- und untenseitig je einen miteinander fluchtenden Anschlussstutzen für eine Wasserzuführungsleitung und für eine Abwasserleitung aufweist, so dass das Schadstoffpartikelchen enthaltende Patientenmundspül- oder Arbeitswasser durch den Behälterinnenraum hindurchströmen kann. In dem Behälterinnenraum sind zwei korbartige Filtergehäuse mit unterschiedlicher Porengrösse übereinanderliegend angeordnet; beide Filtergehäuse sind aus dem Behälter herausnehmbar. Die Behälter sind dabei nicht so ausgebildet, dass die dem Behälter entnommenen und Schadstoffe beinhaltenden Filtergehäuse verschlossen werden können, um sie im geschlossenen Zustand kontrolliert einem Aufbereitungsunternehmen zuführen zu können. Hinzu kommt, dass ein relativ hoher Wasserverbrauch gegeben ist, da das dem Behälter zugeführte Wasser aus dem Behälter abgeleitet wird.

Hinzu kommt, dass es bei aus dem Behälter herausgenommenen Filtergehäusen, die Schadstoffe beinhalten, nicht vermeidbar ist, dass Personen mit den in den Filtern gesammelten Schadstoffen, wie z.B. Metallverbindungen enthaltende Zahnfüllmaterialien, die im Bohrschlamm enthalten sind und dem Behälter mit den Filtern zugeführt werden, in Berührung kommen.

Die Erfindung löst die Aufgabe, eine Vorrichtung der gattungsgemässen Art zu schaffen, mit der es möglich ist, aus Zahnarztpraxen anfallende Schadstoffe wie z.B. aus entfernten Zahnfüllungen stammende Metallverbindungen, insbesondere Quecksilberverbindungen, zu sammeln, vom zahnärztlichen Arbeitswasser zu trennen und zu vermeiden, dass diese Schadstoffe in die Abwasserableitung gelangen, wobei gleichzeitig eine verbesserte Hygiene durch Wegfall einer Reinigung von Separationseinrichtungen u.a. insofern auch erhalten wird, als die gesamten Schadstoffe kontrolliert einem Aufbereitungsunternehmen zugeführt werden können, so dass zu einem verbesserten Umweltschutz beigetragen wird.

Diese Aufgabe wird durch die im Patentanspruch 1 gekennzeichneten Merkmale gelöst.

Mit einer derart ausgebildeten Vorrichtung wird vermieden, dass in Zahnarztpraxen anfallende schädliche Metallverbindungen aus Quecksilber, Silber, Zinn u.dgl. in das Abwasser abgeleitet werden und über dieses in die Umwelt gelangen. Es wird darüber hinaus eine verbesserte Hygiene in den Zahnarztpraxen erhalten, da die Reinigung irgendwelcher Separationseinrichtungen, von Spülbecken, Ausgüssen od.dgl. entfällt. Die Vorrichtung ist dabei so ausgelegt, dass das die Schadstoffe aufnehmende Filtergehäuse von der die entsprechenden Armaturen tragenden Abdeckplatte gelöst und verschlossen wird, um in dem dadurch erhaltenen geschlossenen Behältnis die in diesem gesammelten Schadstoffe kontrolliert einem Aufbereitungsunternehmen zugänglich zu machen. Es besteht dadurch die Möglichkeit, dass gebrauchte Filter und Schadstoffe enthaltende Filter zentral gesammelt und zur Affinierung weitergeleitet werden können, so dass dadurch die Möglichkeit gegeben ist, dass die einzelnen Zahnarztpraxen sich an einem Recycling-System beteiligen können. Hierdurch wird sichergestellt, dass die in den Zahnarztpraxen anfallenden Schadstoffe, d.h. Metallabfälle, nicht zufällig deponiert werden können und somit kein Risiko für die Umwelt entstehen kann. Gebrauchte Filter werden automatisch durch neue ersetzt, so dass Zahnärzte und Zahnarzthelferinnen mit den Schadstoffen selbst in keiner Weise in Berührung kommen. Die bei der Vorrichtung vorgesehenen Niveaukontrollrelais sichern einen minimalen Wasserverbrauch der in dem System vorgesehenen Wasserstrahlpumpe, die sehr betriebssicher ist, weil diese keine mechanischen und beweglichen Teile enthält. Die Rückhalteeffektivität der umweltschädlichen Metallpartikel liegt bei 99%. Der Filter ist in der Handhabung betriebssicher und mechanisch stabil; er ist darüber hinaus so aufgebaut, dass es nicht unmittelbar möglich ist, mit den zurückgehaltenen und in dem Filter gesammelten Metallpartikelchen in Verbindung zu kommen. Der Einsatz der Vorrichtung ist nicht nur auf Zahnarztpraxen beschränkt; sie kann überall dort eingesetzt werden, wo Schadstoffe in Form von Partikelchen anfallen und nicht in das Abwasser gelangen sollen.

Vorteilhaft ist, dass sich die Zahnärzte an einem Recycling-System für diese Filter bzw. die Filtergehäuse mit den in diesen angeordneten Filtern beteiligen können. Dabei wird so vorgegangen, dass vom Hersteller austauschbare Einwegfilter in einer wiederverwendbaren Verpackung den Zahnärzten zur Verfügung gestellt werden. Die Filtergehäuse sind mit einer nicht zu entfernenden Kodierung versehen, über die der Empfänger eindeutig identifizierbar ist. Die Kodierung kann auch gleichzeitig zur Qualitätskontrolle herangezogen werden. Das Filtergehäuse sollte mit einer auffallenden Farbgebung versehen sein, damit eine Entsorgung über die Müllabfuhr erschwert wird. Um sicherzustellen, dass die Filter an den Hersteller zurückgehen, würde bei Rücksendung des mit Schadstoffen beladenen Filters dem Absender ein Bonus ausgezahlt oder gutgeschrieben werden. Dabei besteht auch die Möglichkeit, den Zahnärzten mehrere Filtereinheiten zur Verfügung zu stellen, um bei aussergewöhnlich hohen Belastungszeiten eine entsprechende Anzahl von Filtern zur Verfügung zu haben. Bei Eingang eines mit Schadstoffen beladenen Filters bei dem Aufarbeitungsunternehmen wird dem Absender automatisch ein neuer, gebrauchsfertiger Filter zugesandt. Die mit Schadstoffen beladenen Filter werden entweder vom Hersteller oder von einem Aufbereitungsunternehmen gesammelt, die dann zur Wiederverwertung an eine Affinerie gegeben oder von dem Aufbereitungsunternehmen selbst entsorgt werden. Überraschend ist, dass während der Aufbewahrung mit Schadstoff beladener Filter keine Probleme bezüglich Bakterienwachstum im Filter u.dgl. auftreten, was auf die Anwesenheit von Quecksilber und Silber zurückzuführen ist. Der gesamte Ablauf in diesem Recycling-System wird vom Hersteller oder von dem Aufbereitungsunternehmen gesteuert und kann aus dem Verkauf der wiedergewonnenen Metalle oder auch aus dem Verkauf der Filter finanziert werden, so dass das gesamte System eine hohe Wirtschaftlichkeit hat.

Hinzu kommt, dass die Vorrichtung in jeder Zahnarztpraxis aufgestellt und vermittels vorgesehener Halterungen an den Filtergehäusen an zahnärztlichen Behandlungseinheiten befestigt werden kann. Lediglich ein Wasseranschluss, ein Anschluss für eine Wasserableitung und ein Anschluss an eine Vakuumerzeugungseinrichtung sind erforderlich. Vorteilhafte Ausgestaltungen der Erfindung sind in den Unteransprüchen gekennzeichnet.

Im folgenden wird der Gegenstand der Erfindung in den Zeichnungen erläutert. Es zeigt

Fig. 1 eine schematische Ansicht der Gesamtvorrichtung mit dem die Filter aufnehmenden Filtergehäuse und einem Speibecken,

Fig. 2 teils in Ansicht, teils in einem senkrechten Schnitt das Filtergehäuse mit dem Vorfilter und der Filterpatrone,

Fig. 3 in einer Seitenansicht die obere Abdeckplatte des Filtergehäuses mit der Flüssigkeitsstandsmesseinrichtung aus einer Maximum-, einer Minimum- und einer Referenzelektrode,

Fig. 4 eine Ansicht von oben auf die Abdeckplatte des Filtergehäuses,

Fig. 5 eine Ansicht von unten auf die Abdeckplatte,

Fig. 6 eine Seitenansicht der Trägerplatte mit dem Vorfilter und dem Schwimmerventil,

Fig. 7 eine Ansicht von oben auf die Trägerplatte,

Fig. 8 eine Ansicht von unten auf die Trägerplatte,

Fig. 9 eine Seitenansicht des Vorfilters mit dem hinter diesem liegenden Schwimmerventil,

Fig. 10 eine Seitenansicht des Schwimmerventils mit dem hinter diesem liegenden Vorfilter,

Fig. 11 eine Seitenansicht des Filterpatronendeckels mit einem stopfenartigen Formkörper als Verschlussstopfen,

Fig. 12 eine Ansicht von unten auf den Filterpatronendeckel,

Fig. 13 eine Seitenansicht des Filtergehäuses mit abgenommener Abdeckplatte,

Fig. 14 eine Ansicht von oben auf das offene Filtergehäuse,

Fig. 15 eine Ansicht von unten auf das Filtergehäuse mit dem Haltestutzen,

Fig. 16 eine Seitenansicht eines auf das offene Filtergehäuse aufschraubbaren Verschlussdeckels,

Fig. 17 eine Ansicht von oben auf den Verschlussdeckel gemäss Fig. 16,

Fig. 18 eine Ansicht von unten auf den Verschlussdeckel gemäss Fig. 16,

Fig. 19 eine Seitenansicht eines auf den ausserhalb des Filtergehäuses liegenden Abschnitt des Haltestutzens aufsetzbaren Verschlussstopfens,

Fig. 20 einen senkrechten Schnitt durch den Verschlussstopfen gemäss Fig. 19,

Fig. 21 eine Ansicht von oben auf den Verschlussstopfen,

Fig. 22 eine Ansicht von unten auf den Verschlussstopfen und

Fig. 23 eine schematische Ansicht der zu dem Filtergehäuse führenden Zuführungsleitung mit einem Speibecken und einer weiteren Zuführungsleitung für den Anschluss an eine Speichel- und Bohrwasser-Absaugeinrichtung.

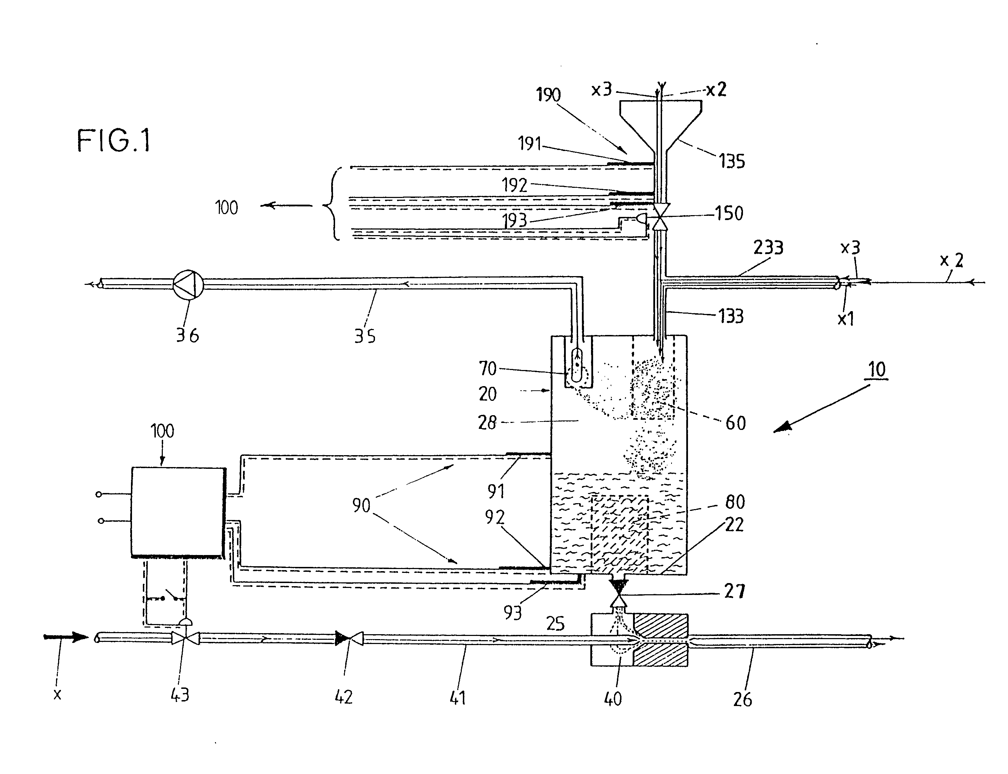

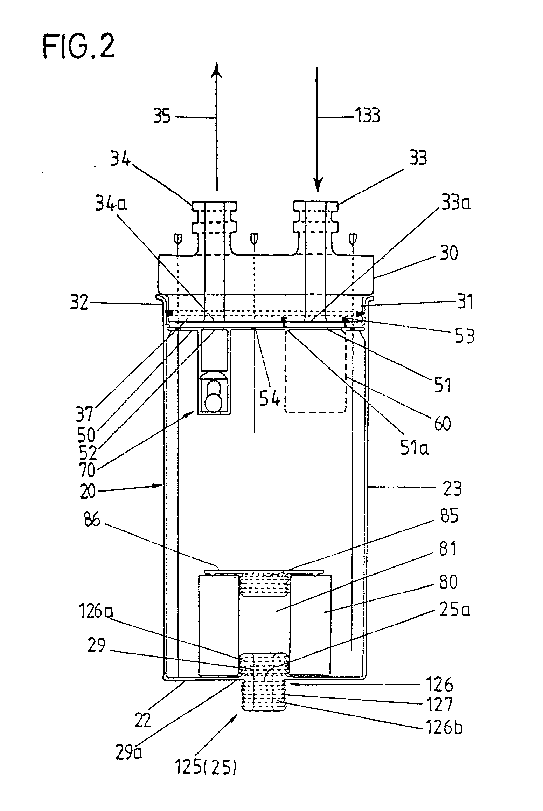

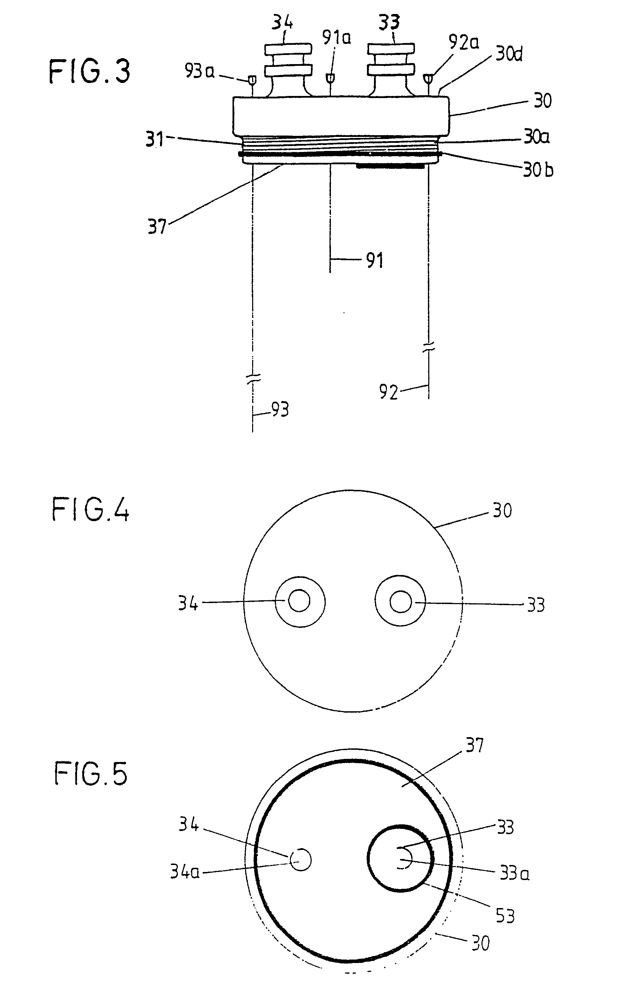

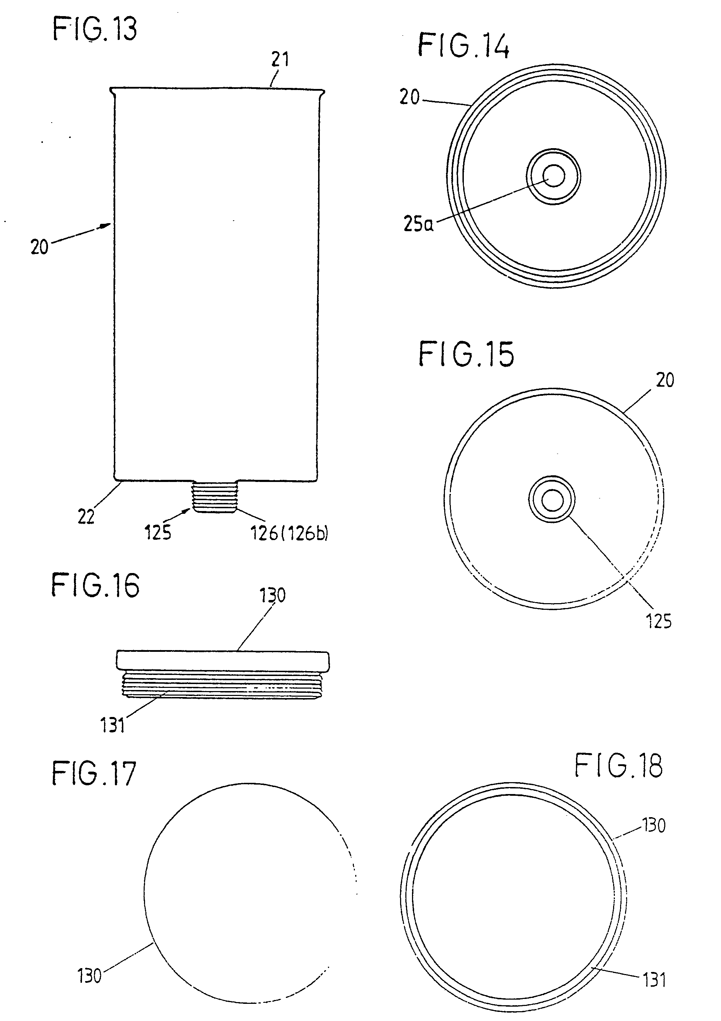

Die in Fig. 1 dargestellte und mit 10 bezeichnete Vorrichtung zur Aufnahme und zum Trennen von insbesondere in Zahnarztpraxen anfallenden und im Bohrschlamm od.dgl. enthaltenden, partikelförmigen Schadstoffen aus Metallverbindungen, wie Quecksilberverbindungen u.dgl., enthaltenden Zahnfüllmaterialien besteht im wesentlichen aus einem Filtergehäuse 20 mit in dessen Innenraum 28 angeordneten Filtern, nämlich einem Vorfilter 60 und einer Filterpatrone 80 (Fig. 2). Das Filtergehäuse 20 aus einem keramischen Werkstoff oder einem anderen geeigneten Werkstoff, wie z.B. Kunststoff, ist obenseitig offen ausgebildet, was in Fig. 13 bei 21 angedeutet ist, und mittels einer oberen Abdeckplatte 30 verschliessbar. Die Gehäusewand des Filtergehäuses 20 ist mit 23 bezeichnet. Bodenseitig ist das Filtergehäuse 20 über eine Bodenplatte 22 verschlossen, in der eine Durchbrechung 29 für den Anschluss an eine Abwasserleitung 26 ausgebildet ist. Das Filtergehäuse 20 ist aussenseitig mit einer in der Zeichnung nicht dargestellten Halterung versehen, um das Filtergehäuse an einer zahnärztlichen Behandlungseinheit od.dgl. befestigen zu können, wobei auch eine Wandbefestigung durchaus möglich ist. Alle die Vorrichtung 10 beinhaltenden und nachstehend noch näher beschriebenen Bauelemente sind vorzugsweise in der Abdeckplatte 30 des Filtergehäuses 20 integriert. Die Abdeckplatte 30, die ebenfalls aus keramischen Werkstoffen oder anderen geeigneten Werkstoffen, wie Kunststoffen, besteht, ist lösbar mit dem Filtergehäuse 20 verbunden und weist hierzu ein Aussengewinde 31 auf, so dass die Abdeckplatte 30 in das an der Innenwandfläche benachbart zum oberen umlaufenden Rand des Filtergehäuses 20 ausgebildeten Innengewinde 32 einschraubbar ist. Wie aus Fig. 3 ersichtlich, ist die Abdeckplatte 30 mit einem halsartig eingezogenen Abschnitt 30a versehen, der mit einem Dichtungsring 30b in Form z.B. eines O-Ringes versehen ist. Anstelle einer Schraubverbindung kann die Abdeckplatte 30 jedoch vermittels andersartig ausgestalteter Elemente an dem Filtergehäuse 20 befestigt werden. Klemm- oder Bügelhalterungen, die an der Aussenwandfläche der Gehäusewand 23 des Filtergehäuses 20 angreifen und die auf das Filtergehäuse 20 aufgesetzte Abdeckplatte übergreifen, können vorgesehen sein.

Die Abdeckplatte 30 ist mit einem Zuführungsstutzen 33 und einem Saugstutzen 34 versehen, die durch die Abdeckplatte 30 hindurchgeführt sind (Fig. 1, 2 und 3). Die beiden Stutzen 33, 34 sind nebeneinanderliegend angeordnet (Fig. 4). Die Öffnungen 33a und 34a der beiden Stutzen 33, 34 liegen in der Innenwandfläche 37 der Abdeckplatte 30 (Fig. 5). Die beiden Stutzen 33, 34 sind an die Abdeckplatte 30 angeformt und sind fester Bestandteil der Abdeckplatte, wobei auch die Möglichkeit besteht, die beiden Stutzen 33, 34 mit Gewinden zu versehen, die dann in Bohrungen mit Innengewinden in der Abdeckplatte 30 einschraubbar sind. Jedoch bedarf diese Ausführungsform zusätzlicher Abdichtungen.

Im Bereich der Öffnung 33a des Zuführungsstutzens 33 ist an der Innenwandfläche 37 der Abdeckplatte 30 des Filtergehäuses 20 ein Dichtungsring 53 angeordnet, der z.B. als O-Ring ausgebildet ist und auf den nachstehend noch näher eingegangen wird (Fig. 5). Des weiteren trägt die Abdeckplatte 30 die Mess- und Referenzelektroden 91, 92, 93 einer Flüssigkeitsstandsmesseinrichtung 90. Die an der Aussenwandfläche 30d der Abdeckplatte 30 des Filtergehäuses 20 angeordneten Anschlusselemente für die Elektroden 91, 92, 93 sind mit 91a, 92a, 93a bezeichnet (Fig. 3). Die Abdeckplatte 30 für das Filtergehäuse 20 bildet mit ihren Stutzen 33, 34 und den drei Elektroden 91, 92, 93 der Flüssigkeitsstandsmesseinrichtung 90 eine Baueinheit.

Die Abdeckplatte 30 ist gegen einen Verschlussdeckel 130 auswechselbar, der mit einem Aussengewinde 131 versehen ist und der in etwa die gleichen Abmessungen aufweist wie die Abdeckplatte 30, nur dass der Verschlussdeckel 130 völlig geschlossen ausgebildet ist und dazu dient, nach Abnahme des Filtergehäuses 20 von der Abdeckplatte 30 durch Aufschrauben des Verschlussdeckels 130 das Filtergehäuse 20 zu verschliessen (Fig. 16, 17 und 18). Aus diesem Grunde besteht auch die Möglichkeit, die Abdeckplatte 30 des Filtergehäuses 20 mit einer Halterung zu versehen, um die Gesamtvorrichtung vermittels der Abdeckplatte 30 an einer zahnärztlichen Behandlungseinheit befestigen zu können, an der dann auch die Abdeckplatte 30 verbleibt, wenn das Filtergehäuse 20 von der Abdeckplatte 30 abgenommen wird.

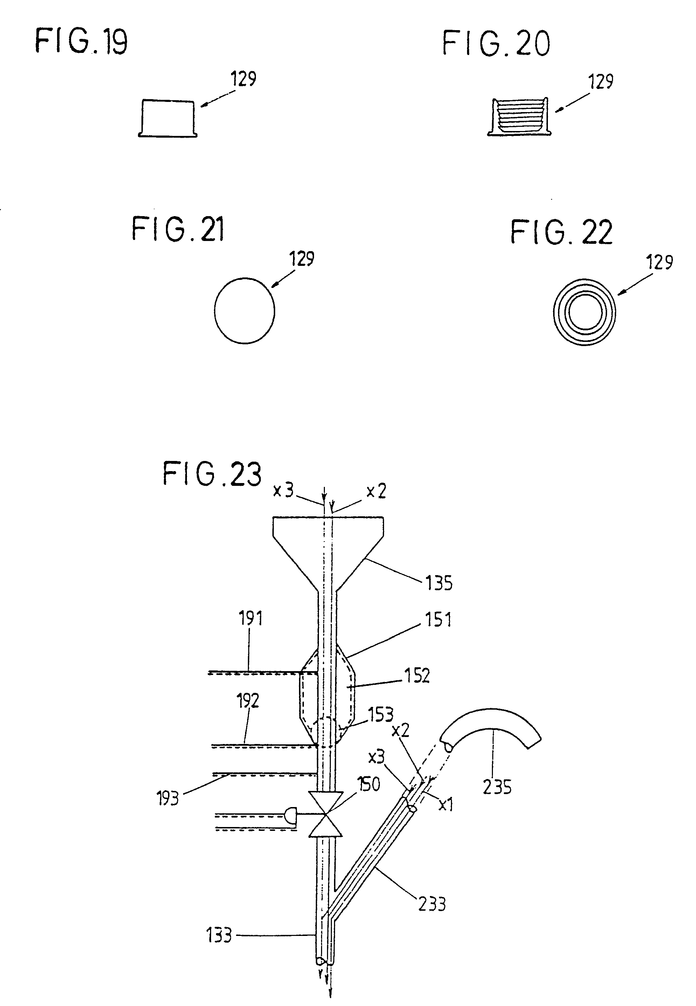

Der Zuführungsstutzen 33 ist angeschlossen oder anschliessbar an eine Zuführungsleitung 133, über die Schadstoff enthaltendes Wasser dem Filtergehäuse 20 zugeführt wird. Diese Zuführungsleitung 133 steht mit einem Speibecken 135 in Verbindung, das integrierter Bestandteil der gesamten Vorrichtung 10 ist oder sein kann (Fig. 1 und 23). Des weiteren mündet bei dem in Fig. 1 und 23 gezeigten Ausführungsbeispiel der Vorrichtung 20 in die Zuführungsleitung 133 eine weitere Zuführungsleitung 233, die mit einer Speichel- und Bohrwasser-Absaugeinrichtung 235 in Verbindung steht (Fig. 23).

Der Saugstutzen 34 ist mit einer Saugleitung 35 verbunden, die an eine Vakuumerzeugungseinrichtung, z.B. an eine Vakuumpumpe 36, angeschlossen ist (Fig. 1).

Die Bodenplatte 22 des Filtergehäuses 20 ist mit einer Durchbrechung 29 versehen, in die ein Wasserablaufstutzen 25 mündet, der gleichzeitig als Halterung für das Filtergehäuse 20 an einer Abwasserleitung 26 ausgebildet sein kann. Diese Halterung ist in Fig. 13 bei 125 angedeutet. In dem Wasserablaufstutzen 25, dessen obere Öffnung 25a in der Innenwandfläche der Bodenplatte 22 des Filtergehäuses 20 liegt und somit gleichzeitig auch die Durchbrechung 29 in der Bodenplatte darstellt, ist ein Rückschlagventil 27 angeordnet. Der Wasserablaufstutzen 25 mündet in eine in an sich bekannter Weise ausgebildete Wasserstrahlpumpe 40, wobei jedoch auch eine andersartig ausgebildete Pumpe zur Anwendung gelangen kann. Der Zulauf des Wassers zu der Wasserstrahlpumpe 40 erfolgt über die Zuführungsleitung 41, in der ein Rückschlagventil und ein Magnetventil 43 angeordnet sind (Fig. 1). Die Austrittsöffnung der Wasserstrahlpumpe 40 für den Wasserstrahl ist mit der Abwasserableitung 26 verbunden, so dass aus dem Innenraum 28 des Filtergehäuses 20 sich ansammelndes Wasser vermittels der Wasserstrahlpumpe 40 abgesogen werden kann. Das Rückschlagventil 27 verhindert den Rücklauf von Wasser in den Innenraum 28 des Filtergehäuses 20, wenn die Vakuumpumpe 36 in Betrieb ist.

Unterhalb der auf das Filtergehäuse 20 aufgesetzten Abdeckplatte 30 ist in dem Innenraum 28 des Filtergehäuses 20 eine Trägerplatte 50 angeordnet, die den Innenraum 28 des Filtergehäuses 20 nach oben abschliesst und die mit in der Zeichnung nicht dargestellten Durchbrechungen für das Hindurchführen der drei Elektroden 91, 92, 93 der Flüssigkeitsstandsmesseinrichtung 90 versehen ist. Diese Trägerplatte 50 kann in das Filtergehäuse 20 eingehängt sein. Hierzu weist die Innenwandfläche der Gehäusewand 23 des Filtergehäuses 20 einen in den Innenraum 28 auskragenden umlaufenden Randabschnitt auf, auf dem die Trägerplatte 50 aufliegt, die eine Form aufweist, die der Querschnittsform des Filtergehäuses 20 entspricht. Die Trägerplatte 50 kann jedoch auch in anderer Weise in dem Innenraum 28 unterhalb der aufgesetzten Abdeckplatte 30 angeordnet sein. Die Befestigung der Trägerplatte 50 kann auch mittels einer Klemmhalterung oder eines Klemmsitzes erfolgen, wobei dann die Trägerplatte 50 mit einer in der Zeichnung nicht dargestellten griffartigen Handhabe versehen ist, um das Filtergehäuse 20 für die Entsorgung zu öffnen. Die Trägerplatte 50 besteht aus keramischen Werkstoffen oder anderen geeigneten Werkstoffen; u.a. können auch Kunststoffe zur Herstellung der Trägerplatte 50 herangezogen werden.

Die Trägerplatte 50 weist im Bereich der Öffnung 33a des Zuführungsstutzens 33 eine Durchbrechung 51 auf, deren Durchmesser dem Durchmesser der Öffnung 33a des Zuführungsstutzens 33 entsprechen kann; vorzugsweise wird jedoch der Durchmesser der Durchbrechung 51 in der Trägerplatte 50 gegenüber dem Durchmesser der Öffnung 33a des Zuführungsstutzens 33 grösser bemessen sein (Fig. 2). Der die Durchbrechung 51 begrenzende Rand ist mit 51a bezeichnet (Fig. 2).

Im Bereich dieser Durchbrechung 51 der Trägerplatte 50 ist an dieser, und zwar an deren Innenwandfläche 54, ein Vorfilter 60 angeordnet, der vorzugsweise als Filtersack ausgebildet ist, und zwar derart, dass er für Flüssigkeiten durchlässig ist, jedoch ein ausreichendes Rückhaltevermögen für Feststoffteilchen besitzt. Die Porenweite beträgt vorzugsweise 1 bis 2 mm. Jedoch wird sich die Porenweite des Vorfilters 60 jeweils nach der Grösse der Schadstoffpartikelchen richten, wobei auch die Möglichkeit besteht, dem Benutzer der Vorrichtung 10 mehrere Vorfilter mit unterschiedlichen Porenweiten anzubieten. Die Befestigung des Vorfilters 60 an der Innenwandfläche 54 der Trägerplatte 50 erfolgt mittels in der Zeichnung nicht dargestellter geeigneter Einrichtungen. So kann u.a. der Filtersack des Vorfilters 60 mit einem Kunststoffring versehen sein, der entsprechend ausgebildet ist, so dass beispielsweise die Befestigung an der Trägerplatte 50 über eine Bajonettverbindung erfolgt. Jedoch auch Klemm-, Rast- oder andersartige Befestigungsmöglichkeiten können hier für den Vorfilter zur Anwendung kommen. Wesentlich ist, dass der Vorfilter 60 mit der Trägerplatte 50 lösbar verbunden ist.

Die Anordnung des Vorfilters 60 an der Trägerplatte 50 ist ausserhalb der Mitte der Abdeckplatte 30 des Filtergehäuses 20, damit ein ausreichender Abstand zur Saugöffnung 34a des Saugstutzens 34 eingehalten wird (Fig. 2).

Zur Abdichtung des umlaufenden Randes 51a der Durchbrechung 51 in der Trägerplatte 50 zu der Innenwandfläche 37 der Abdeckplatte 30 des Filtergehäuses 20 dient der in Fig. 2, 3 und 5 dargestellte Dichtungsring 53, der so bemessen ist, dass der zwischen der Trägerplatte 50 und der Innenwandfläche 37 der Abdeckplatte 30 gegebene Zwischenraum überbrückt wird, ohne dass dem Vorfilter 60 über den Zuführungsstutzen 33 zugeführte Flüssigkeit in diesen Zwischenraum zwischen der Trägerplatte 50 und der Innenwandfläche 37 der Abdeckplatte 30 strömen kann. Der Dichtungsring 53 kann einerseits an der Innenwandfläche 37 der Abdeckplatte 30 befestigt sein (Fig. 3); es besteht jedoch auch die Möglichkeit, den Dichtungsring 53 an der Trägerplatte 50 im Bereich des umlaufenden Randes 51a der Durchbrechung 51 vorzusehen. Doch ist es vorteilhafter, wenn der Dichtungsring 53 an der Innenwandfläche 37 der Abdeckplatte 30 befestigt bzw. gehalten ist, so dass bei einer Abnahme des Filtergehäuses 20 von der Abdeckplatte 30, die beim Besitzer der Vorrichtung 10 verbleibt, wenn das Filtergehäuse 20 mit Schadstoffen angefüllt sein sollte, der Dichtungsring 53 an der Abdeckplatte 30 verbleibt, um dann eine ausreichende Dichtung jederzeit zur Verfügung zu haben, wenn an die Abdeckplatte 30 ein gereinigtes Filtergehäuse 20 angeschlossen wird.

Die Trägerplatte 50 ist mit einer weiteren Durchbrechung 52 versehen, die im Bereich der Saugöffnung 34a des Saugstutzens 34 liegt bzw. dieser Saugöffnung 34a gegenüberliegend angeordnet ist, wenn die Trägerplatte 50 in das Filtergehäuse 20 eingesetzt ist. Im Bereich dieser Durchbrechung 52 ist ein als Schwimmerventil ausgebildetes Sicherheitsventil 70 angeordnet. Dieses Sicherheitsventil 70 bewirkt, dass keine Flüssigkeit aus dem Innenraum des Filtergehäuses und von dem Vorfilter 60 zur Vakuumpumpe abgesogen wird. Auch die Durchbrechung 52 in der Trägerplatte 50 ist, wenn diese in den Innenraum 28 des Filtergehäuses 20 eingesetzt ist, zu der Innenwandfläche 37 der Abdeckplatte 30 mittels eines Dichtungsringes abgedichtet, so dass bei Inbetriebnahme der Vakuumpumpe 36 über den Zwischenraum zwischen der Trägerplatte 50 und der Innenwandfläche 37 der Abdeckplatte 30 keine Flüssigkeit angesogen werden kann, wenn z.B. der Dichtungsring 53, der am umlaufenden Rand 51a der Durchbrechung 51 in der Trägerplatte 50 vorgesehen ist, undicht werden sollte. Es ist jedoch ausreichend, dass bei Vorhandensein des Dichtungsringes 53 dann auf eine zusätzliche Dichtung im Bereich der Saugöffnung 34a des Saugstutzens 34 in der Innenwandfläche 37 der Abdeckplatte 30 verzichtet werden kann.

Das Filtergehäuse 20 ist in seinem Innenraum 28 zur Befestigung der Trägerplatte 50 mit einer in der Zeichnung nicht dargestellten Arretierung für die Trägerplatte 50 versehen, so dass eine Entfernung der Trägerplatte nur dann möglich ist, wenn die Arretierung beseitigt ist. Diese Arretierung kann in Form eines in dem Bereich der Trägerplatte 50 verschwenkbaren Verriegelungsnockens erfolgen, der z.B. als Vorreiber ausgebildet ist und der erst nach dem Herausschwenken aus dem Trägerplattenbereich die Trägerplatte zur Entnahme freigibt. Jedoch auch andersartig ausgebildete Verriegelungseinrichtungen können hier zur Anwendung gelangen.

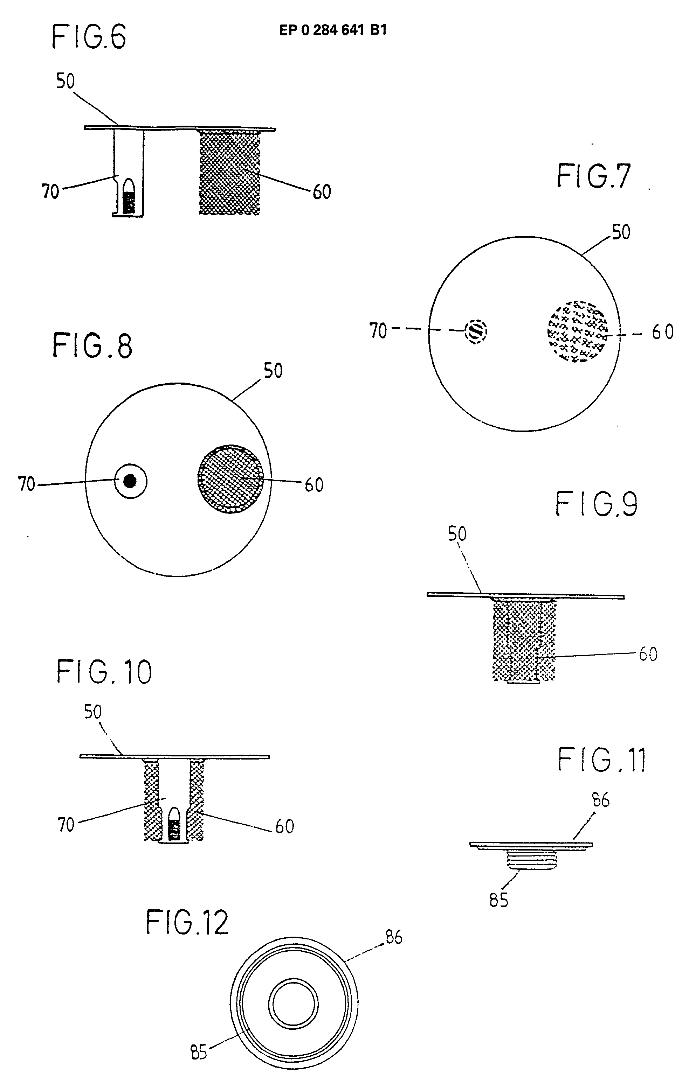

Die Zuordnung des Vorfilters 60 zu dem Schwimmerventil 70 ist in den Fig. 6 bis 10 dargestellt. Da zwischen dem Vorfilter 60 und dem Sicherheitsventil 70 ein ausreichender Abstand besteht, ist ausgeschlossen, dass durch den Vorfilter 60 strömende Flüssigkeit direkt über den Saugstutzen 34 bei Inbetriebnahme der Vakuumpumpe 36 angesogen wird.

In dem Innenraum 28 des Filtergehäuses 20 ist neben dem Vorfilter 60 ein weiterer Filter angeordnet, der als Filterpatrone 80 ausgebildet ist, die auf der Bodenplatte 22 des Filtergehäuses 20 befestigt ist. Diese Filterpatrone 80 ist mit einer mittigen Durchbohrung 81 versehen (Fig. 1). Diese Durchbohrung 81 ist obenseitig mittels eines stopfenartigen Formkörpers 85 verschlossen, der an einer Deckelplatte 86 befestigt ist, die mit der Filterpatrone 80 verbunden ist. Wie Fig. 11 und 12 zeigen, weist dieser stopfenartige Formkörper 85, der aus Kunststoffen oder einem anderen geeigneten Material besteht, auf seiner Aussenwandfläche ein sägezahnförmiges Rastprofil auf, um einen festen Sitz in der Durchbohrung 81 zu gewährleisten.

Die bodenseitige Befestigung der Filterpatrone 80 an der Bodenplatte 22 des Filtergehäuses 20 erfolgt über den Wasserablaufstutzen 25 oder über eine gesonderte Halterung 125 (Fig. 1, 13, 14 und 15). Erfolgt die Befestigung über den Wasserablaufstutzen 25, dann ist dieser mit einem Abschnitt durch eine Durchbrechung 29 in der Bodenplatte 22 des Filtergehäuses 20 hindurchgeführt, wobei dann die Abmessungen des Stutzenabschnittes, der im Innenraum 28 des Filtergehäuses 20 liegt, so bemessen sind, dass dieser Wasserablaufstutzenabschnitt in der Durchbohrung 81 der Filterpatrone 80 mit festem Sitz gehalten ist, so dass das Filtergehäuse 20 von dem Wasserablaufstutzen 25 abgezogen werden kann, wobei es jedoch bei dieser Ausführungsform erforderlich ist, dass noch eine zusätzliche Halterung der Filterpatrone 80 an der Bodenplatte 22 des Filtergehäuses 20 vorgesehen ist.

Vorzugsweise wird jedoch für den Anschluss des Filtergehäuses 20 an den Wasserablaufstutzen 25 die Halterung 125 verwendet, die stutzenförmig ausgebildet ist. Dieser mit 126 bezeichnete Haltestutzen (Fig. 2 und 13) kann als gesondertes Bauteil Verwendung finden; es besteht jedoch auch die Möglichkeit, diesen Haltestutzen 126 mit der Bodenplatte 22 des Filtergehäuses 20 zu integrieren. In diesem Fall ist der Haltestutzen 126 mit dem umlaufenden Rand 29a der Durchbrechung 29 in der Bodenplatte 22 fest verbunden. In beiden Fällen, sowohl bei der lösbaren Anordnung des Haltestutzens 126 als auch bei der festen Anordnung des Haltestutzens 126 an der Bodenplatte 22, ragt der Haltestutzen 126 mit einem oberen Abschnitt 126a in den Innenraum der Durchbohrung 81 der Filterpatrone 80 und mit einem ausserhalb des Filtergehäuses 20 liegenden Abschnitt 126b in die obere Öffnung des Wasserablaufstutzens 25 (Fig. 2). Die Aussenwandfläche des Haltestutzens 126 ist mit einer sägezahnförmigen Profilierung versehen, um sowohl einen festen Sitz in dem Innenraum der Durchbohrung 81 der Filterpatrone 80 als auch in der Öffnung des Wasserablaufstutzens 25 zu gewährleisten. Der Haltestutzen 126 selbst besteht vorzugsweise aus elastischen Kunststoffen, um einen sicheren Sitz des Haltestutzens 126 in der Durchbohrung 81 und in der Öffnung des Wasserablaufstutzens 25 zu erreichen. Das rippenförmige Rastprofil an der Aussenwandfläche des Haltestutzens 126 ist mit 127 bezeichnet.

Aufgrund der Verwendung des Haltestutzens 126 ist es möglich, die Filterpatrone 80 von dem Haltestutzen 126 abzuziehen und aus dem Innenraum 28 des Filtergehäuses 20 herauszunehmen, falls dies erforderlich sein sollte. Auf der anderen Seite ist mit dem ausserhalb des Filtergehäuses 20 liegenden Abschnitt 126b des Haltestutzens 126 gleichzeitig eine Halte- und Befestigungsmöglichkeit für das Filtergehäuse 20 an dem Wasserablaufstutzen 25 gewährleistet (Fig. 13). Der Wasserzulauf zu der Wasserstrahlpumpe 40 über die Leitung 41 erfolgt in Pfeilrichtung X (Fig. 1).

Um das Filtergehäuse 20 mit den die Schadstoffpartikelchen enthaltenden Filtern 60 und 80 transportieren zu können, wird das Filtergehäuse nach Abnahme von seiner Abdeckplatte 30 mittels des Verschlussdeckels 130 verschlossen. Der bodenseitige Verschluss des Filtergehäuses 20 erfolgt mittels eines Verschlussstopfens 129, der kappenförmig ausgebildet ist und der auf den Stutzenabschnitt 126b des Haltestutzens 126 aufgesetzt oder aufgeschraubt wird, wenn der Haltestutzen 126 ein Aussengewinde trägt und der Verschlussstopfen bzw. die Verschlusskappe 129 mit einem Innengewinde versehen ist (Fig. 19 bis 21). Ist der Haltestutzen 126 an seiner Aussenwandfläche mit dem rippenartigen Rastprofil 127 versehen, dann weist der Verschlussstopfen oder die Verschlusskappe 129 eine entsprechende Innenprofilgebung auf, um einen festen Sitz des Verschlussstopfens bzw. der Verschlusskappe 129 an dem Haltestutzenabschnitt 126b zu gewährleisten. Der Verschlussstopfen 129 kann so ausgebildet sein, dass er in die ausserhalb des Filtergehäuses 20 liegende Öffnung des Haltestutzens 126 einführbar ist; jedoch kann der Verschlussstopfen 126 auch kappenförmig ausgebildet sein, so dass dann ein Aufsetzen von aussen auf die Öffnung des Haltestutzens 126 möglich ist.

In dem Innenraum 28 des Filtergehäuses 20 ist die Flüssigkeitsstandsmesseinrichtung 90 angeordnet, die aus der Maximum-Messelektrode 91, der Minimum-Messelektrode 92 und der Referenzelektrode 93 besteht, die die Aufgabe hat, festgelegte Bezugswerte bereitzustellen. Mittels dieser Flüssigkeitsstandsmesseinrichtung 90 ist es möglich, den Flüssigkeitsspiegel im Innenraum 28 des Filtergehäuses 20 zu regulieren und vorzugeben. Bei dem in Fig. 1 gezeigten Ausführungsbeispiel sind die beiden Messelektroden 91, 92 in der Filtergehäusewand 23 angeordnet, während die Referenzelektrode 93 in die Bodenplatte 22 mündet. Mit dieser Anordnung der beiden Elektroden 91, 92 ist aufgezeigt, in welchem Füllstandsbereich sich die Flüssigkeit im Innenraum 28 des Filtergehäuses 20 bewegt und welcher Flüssigkeitsstand aufrechtzuerhalten ist. Wie schon voranstehend darauf hingewiesen, sind jedoch die drei Elektroden 91, 92, 93 der Flüssigkeitsstandsmesseinrichtung 90 in der Abdeckplatte 30 des Filtergehäuses 20 angeordnet (Fig. 2 und 3). Vermittels der Maximum-Messelektrode 91 und der Minimum-Messelektrode 92 wird ein konstantes Flüssigkeitsniveau oberhalb der Filterpatrone 80 in einem vorgegebenen Bereich aufrechterhalten. Alle drei Elektroden 91, 92, 93 sind in einem Steuerwerk 100 zusammengeführt (Fig. 1).

Dieses Steuerwerk ist als Niveaukontrollrelais ausgebildet und steht mit dem Magnetventil 43 und einem weiteren Magnetventil 150 in der Zuführungsleitung 133 in Verbindung, d.h., die beiden Magnetventile 43 und 150 werden über dieses Steuerwerk 100 gesteuert. Als Füllstandskontrolle finden die in an sich bekannter Weise ausgebildeten Flüssigkeitsstandsmesseinrichtungen Anwendung. So kann die Füllstandskontrolle u.a. auch unter Verwendung eines Kaltleiters durchgeführt werden, der in der Weise arbeitet, dass, sobald die Flüssigkeit in dem Innenraum 28 des Filtergehäuses 20 die Höhe des Kaltleiters erreicht, der Kaltleiter gekühlt wird, so dass seine Widerstandswärme besser abgeleitet wird. Dadurch steigt die Leitfähigkeit des Kaltleiters und damit die Stromstärke an. Das Ansteigen der Stromstärke kann zur Steuerung des Zuflusses neuer Flüssigkeit verwendet werden, so dass z.B. über ein Relais der weitere Zufluss von Flüssigkeit abgeschaltet wird. Es besteht die Möglichkeit, eine derartig ausgebildete Füllstandskontrolleinrichtung im oberen Bereich des Innenraumes 28 des Filtergehäuses 20 und im unteren Bereich des Filtergehäuses anzuordnen, so dass dann eine Flüssigkeitsbewegung in einem Maximumbereich und in einem Minimumbereich gesteuert wird.

Als Filterpatrone 80 wird vorzugsweise ein Fabrikat vom Typ AMF-Cuno-Micro-Clean 2278-B2 mit Melaminbinder und Cellulosefiber bei 5 Micrometer Filterungsfeinheit verwendet. Jedoch auch andersartig ausgebildete Filterpatronen mit den jeweils erforderlichen Durchlässigkeiten können zur Anwendung gelangen.

In der Zuführungsleitung 133, die von dem Speibecken 135 zu dem Zuführungsstutzen 33 der Abdeckplatte 30 des Filtergehäuses 20 führt, ist oberhalb der Einmündung der von der Speichel- und Bohrwasser-Absaugeinrichtung 235 kommenden Zuführungsleitung 233 ein Magnetventil 150 angeordnet (Fig. 23). In dem Bereich zwischen dem Magnetventil 150 und dem Speibecken 135 ist in der Zuführungsleitung 133 ein etwa rohrförmiger Behälter 151 angeordnet, der in seinem Innenraum 152 eine Schwimmerkugel 153 enthält. Vermittels dieser Einrichtungen 151, 152, 153 wird verhindert, dass Luft über das Speibecken angesogen wird, wenn die Speichel- und Bohrwasser-Absaugeinrichtung 235 in Betrieb ist, wobei es sich bei dieser Einrichtung 235 um ein abgebogenes Saugröhrchen handelt, das in dem Mund des zu behandelnden Patienten eingesetzt und das an die Vakuumerzeugungseinrichtung über das Filtergehäuse angeschlossen ist, um Speichel, Bohrflüssigkeit, Bohrschlamm und Spülwasser absaugen zu können (Fig. 23).

Hinzu kommt noch, dass eine weitere Flüssigkeitsstandsmesseinrichtung 190 in dem Bereich zwischen dem Speibecken 135 und dem Magnetventil 150 in der Zuführungsleitung 133 vorgesehen ist, die ebenfalls aus einer Maximum-Messelektrode 191, einer Minimum-Messelektrode 192 und einer Referenzelektrode 193 besteht, wobei ebenfalls alle drei Elektroden 191, 192, 193 in dem Steuerwerk 100 zusammengeführt sind, das auch mit dem Magnetventil 150 verbunden ist. Vermittels dieser Flüssigkeitsstandsmesseinrichtung 190 wird der Flüssigkeitsstand in der Zuführungsleitung 133 bzw. in dem Speibecken 135 geregelt und konstant gehalten. Vermittels der Messelektrode 191 ist der obere Flüssigkeitsstand festgelegt und durch die Minimum-Messelektrode 192 der untere Füllstand, der nicht unterschritten werden soll.

Die Verbindung der Zuführungsleitung 133 für das Schadstoffpartikelchen enthaltende Wasser zu dem Zuführungsstutzen 33 und der Saugleitung 35 zu dem Saugstutzen 34 an der Abdeckplatte 30 kann über starre, d.h. feste, und auch über schlauchförmige Verbindungsleitungen erfolgen. Die gesamte Mess- und Regeleinrichtung 90, 190 und das Steuerwerk 100 können integrierter Bestandteil der Abdeckplatte 30 sein. Jedenfalls ist die Gesamtvorrichtung 10 so aufgebaut, dass das Filtergehäuse 20 mit seinem Vorfilter 60 und seiner Filterpatrone 80 aus dem Gesamtsystem bzw. aus der Gesamtanlage herausnehmbar ist. Es besteht auch die Möglichkeit, die Gesamtvorrichtung 10 in einem in der Zeichnung nicht dargestellten Gerätegehäuse unterzubringen, das dann so ausgebildet ist, dass das Filtergehäuse 20 nach dem Abnehmen von der Abdeckplatte 30 aus dem Vorrichtungsgehäuse herausgenommen werden kann. Das Gehäuse ist dann mit den entsprechenden Anschlüssen für die Zuführungsleitung 133, die Saugleitung 35, die Wasserzuführungsleitung 41 und die Abwasserleitung 26 versehen, wobei auch das Speibecken 135 mit in dieses Gehäuse der Vorrichtung integriert sein kann.

In den Fig. 1 und 23 ist mit X1 die Luftzuführung gekennzeichnet, mit X2 der Verlauf der Flüssigkeit, wie Spülwasser, Bohrschlamm, Bohrwasser u.dgl., während die Wasserzuführung in Pfeilrichtung X3 erfolgt.

Das Filtergehäuse 20 kann unmittelbar an einem Behandlungsstuhl oder an einer anderen Stelle vermittels einer Halteeinrichtung im Behandlungszimmer montiert werden. Wesentlich ist, dass das Filtergehäuse 20 gegenüber dem Speibecken 135, welches mit einer Wasserzuführung versehen ist, immer unterhalb des Speibeckens angeordnet ist. Pro Behandlungseinheit ist ein Filtergehäuse 20 mit dem Vorfilter 60 und der Filterpatrone 80 erforderlich. Sollte ein Bedarf für einen grossen Filter für mehrere Behandlungseinheiten bestehen, so müssten dann das Filtergehäuse 20 und seine beiden Filter 60, 80 entsprechend ausgelegt sein. Die übrigen Bauelemente, wie Niveaukontrollrelais, Rückschlagventil u.dgl. können individuell entweder in einem Steuerungsgehäuse oder auch einzeln montiert sein. Die Montage sollte sich aber nach den jeweils vorhandenen Anschlüssen richten, da z.B. ein sehr langer Vakuumschlauch zwischen dem Filtergehäuse 20 und der Wasserstrahlpumpe zu einem erhöhten Wasserverbrauch führen könnte.

Die Vorrichtung 10 arbeitet unter Bezugnahme auf Fig. 1 wie folgt:

Die Druckdifferenz in dem Vorfilter 60 wird von der Vakuumpumpe 36 erzeugt, während die Druckdifferenz über die Filterpatrone 80 mit Hilfe der Wasserstrahlpumpe 40 erzeugt wird.

Flüssigkeits- und Feststoffpartikel werden in dem Vorfilter 60 grob gefiltert und gleichzeitig wird eine Koalisierung (Tropfenbildung) der Flüssigkeitspartikel erreicht. Die entsprechenden Tropfen gelangen in den Innenraum des Filtergehäuses 20. In diesen Tropfen sind auch die nicht in dem Vorfilter 60 zurückgehaltenen Feststoffpartikelchen enthalten. Um auch sehr kleine Flüssigkeits- und Feststoffpartikel daran zu hindern, in die Filterpatrone 80 zu gelangen, wird der Luftstrom teils durch die Form des Filters und teils dadurch, dass das Schwimmerventil 70 keine Öffnung zum Vorfilter aufweist, zum Abbiegen gezwungen, wobei dann die Partikelchen koagulieren und in den Innenraum des Filtergehäuses 20 in Richtung zu dessen Bodenplatte fallen.

Nach und nach wird ein vorbestimmtes Flüssigkeitsniveau in dem Innenraum 28 des Filtergehäuses 20 erreicht, wobei dann selbsttätig, und zwar gesteuert über das Steuerwerk 100, die Wasserstrahlpumpe 40 in Betrieb gesetzt wird. Das Flüssigkeitsniveau wird von der Maximum-Messelektrode 91 und der Minimum-Messelektrode 92, die in dem Steuerwerk 100 zusammengeführt sind, gesteuert. Wenn das Flüssigkeitsniveau die Maximum-Messelektrode 91 erreicht hat, dann schaltet das Steuerwerk 100 den Strom für das Elektromagnetventil 43 ein, wodurch der Zustrom von Leitungswasser in Pfeilrichtung X geöffnet wird. Das Wasser strömt durch das Elektromagnetventil 43, das Rückschlagventil 42 und die Wasserstrahlpumpe 40 in die Abwasserableitung 26. In der Wasserstrahlpumpe 40 kommt ein Jet-Strom zustande, der ein Vakuum in der Filterpatrone 80 erzeugt. Über dieses Vakuum werden aus dem Filtergehäuse 20 Flüssigkeits- und Feststoffpartikelchen in die Filterpatrone 80 gesogen. Die durch die Filterpatrone 80 gefilterte Flüssigkeit wird über die Wasserstrahlpumpe 40 in die Kanalisation, d.h. in die Abwasserleitung, geleitet. Wenn der Flüssigkeitsstand den Bereich der Minimum-Messelektrode 92 erreicht hat, ist das Filtergehäuse 20 entleert und der Strom für das Elektromagnetventil 43 wird etwa nach fünf bis fünfzehn Sekunden ausgeschaltet, so dass kein Leitungswasser mehr als unbedingt erforderlich verbraucht wird.

Das Rückschlagventil 42 in der Wasserzuführungsleitung 41 verhindert, dass Flüssigkeit und Bakterien von der Filterseite in das öffentliche Wasserversorgungsnetz gelangen. Das Rückschlagventil 27 unterhalb des Filtergehäuses 20 verhindert einen Flüssigkeitsrücklauf über die Wasserstrahlpumpe 40 in die Filterpatrone 80 und somit in den Innenraum 28 des Filtergehäuses 20.

Es bieten sich zwei verschiedene Möglichkeiten an, das Steuerwerk 100 bzw. das entsprechend ausgebildete Niveauregulierungsrelais und damit den Filterprozess in Gang zu setzen. Wird nur die Speichel- und Bohrwasser-Absaugeinrichtung 235, d.h. der Patientensauger, benutzt, dann wird damit Flüssigkeit in den Vorfilter 60 gesogen, bis der Flüssigkeitsstand die Maximum-Messelektrode 91 erreicht hat. Die zweite Möglichkeit sieht vor, dass, wenn das Speibecken 135 mit dem Wasserzulauf und evtl. einer Speifontaine in Betrieb ist, dann Flüssigkeit in dem Behälter 151 bzw. in der Zuführungsleitung 133 unterhalb des Speibeckens 135 sich aufstaut, weil das Magnetventil 150 geschlossen ist. Wenn das Flüssigkeitsniveau die Maximum-Messelektrode 191 erreicht hat, wird das Steuerwerk bzw. Niveaukontrollrelais 100 sowohl das Magnetventil 150 als auch das Magnetventil 43 öffnen, wobei das Wasser unterhalb des Speibeckens 135 abläuft und der Filterprozess in Gang gesetzt wird. Wenn das Flüssigkeitsniveau unterhalb des Speibeckens 135 die Minimum-Messelektrode 192 erreicht hat, schliessen beide Magnetventile 150 und 43 wieder. Alternativ zur Steuerung des Magnetventils 150 kann auch ein selbsttätig arbeitendes Niveaukontrollrelais bzw. Steuerwerk vorgesehen sein.

## Patentansprüche

1. Vorrichtung zur Aufnahme von partikelförmigen Schadstoffen und zum Trennen von Wasser und partikelförmigen Schadstoffen, insbesondere von in Zahnarztpraxen anfallenden, im Bohrschlamm von Zahnfüllmaterialien od.dgl. enthaltenen, partikelförmigen Schadstoffen aus Metallverbindungen, wie Quecksilberverbindungen u.dgl., wobei die Vorrichtung an eine erste Wasserzuführungsleitung (133) und an eine Abwasserleitung (26) anschliessbar ist, und ein vorzugsweise zylindrisches, geschlossenes und austauschbares Filtergehäuse (20) mit einem Vorfilter (60) und einer Filterpatrone (80), eine mit dem Filtergehäuse lösbar verbundene obere Abdeckplatte (30) mit einem mit der ersten Zuführungsleitung (133) verbundenen Zuführungsstutzen (33) für die Zuführung von Schadstoffe enthaltendem Wasser, insbesondere Patientenmundspülwasser oder aus dem Mund des Patienten abgesogenes Arbeitswasser, sowie eine Bodenplatte (22) mit einem Wasserablaufstutzen (25) aufweist, der an die Abwasserleitung (26) anschliessbar ist, dadurch gekennzeichnet, dass die obere Abdeckplatte einen Saugstutzen (34) aufweist, der über eine Saugleitung (35) mit einer Vakuumerzeugungseinrichtung, wie Vakuumpumpe (36), verbunden ist, dass unterhalb der Abdeckplatte (30) in dem Innenraum (28) des Filtergehäuses (20) eine Trägerplatte (50) angeordnet ist, die unterhalb der in der Abdeckplatteninnenwandfläche (37) liegenden Öffnung (33a) des Zuführungsstutzens (33) eine erste Durchbrechung (51) und unterhalb der in der Abdeckplatteninnenwandfläche (37) liegenden Öffnung (34a) des Saugstutzens (34) eine zweite Durchbrechung (52) aufweist, wobei die erste Durchbrechung (51) grösser als die Zuführungsstutzenöffnung (33a) bemessen ist und der die erste Durchbrechung (51) begrenzende umlaufende Rand (51a) mittels eines Dichtungsringes, wie O-Ring od.dgl. (53), zu der Abdeckplatteninnenwandfläche (37) abgedichtet ist, dass der Vorfilter (60) unterhalb der ersten Durchbrechung (51) an die Trägerplatte (50) angeschlossen und mit dieser lösbar verbunden ist, dass unterhalb der zweiten Durchbrechung (52) ein vorzugsweise als Schwimmerventil ausgebildetes Sicherheitsventil (70) zur Verhinderung des Ansaugens von aus dem Vorfilter (60) austretender Flüssigkeit angeschlossen ist, dass die Filterpatrone (80) auf der Bodenplatte (22) im Bereich der in den Filtergehäuseinnenraum mündenden Öffnung (25a) des Wasserablaufstutzens (25) mittels einer Halterung (125) angeordnet ist, dass der Wasserablaufstutzen (25) mit dem Saugstutzen einer Saugpumpe (40) verbunden ist, deren Druckstutzen in die Abwasserleitung (26) mündet, und dass in dem Innenraum (28) des Filtergehäuses (20) eine Flüssigkeitsstandsmesseinrichtung (90) zur Aufrechterhaltung eines konstanten Flüssigkeitsniveaus oberhalb der Filterpatrone (80) angeordnet ist.

2. Vorrichtung nach Anspruch 1, dadurch gekennzeichnet, dass die Saugpumpe (40) als Wasserstrahlpumpe ausgebildet ist, die mit einer Wasserzuführungsleitung (41) in Verbindung steht, wobei in dem Wasserablaufstutzen (25) des Filtergehäuses (20) ein Rückschlagventil (27) angeordnet ist.

3. Vorrichtung nach Anspruch 1 und 2, dadurch gekennzeichnet, dass die erste Zuführungsleitung (133) mit einem Speibecken (135) mit Wasserspülung verbunden ist.

4. Vorrichtung nach Anspruch 1 bis 3, dadurch gekennzeichnet, dass an die erste Zuführungsleitung (133) eine zweite Zuführungsleitung (233) angeschlossen ist, die mit einer Speichel- und Bohrwasser-Absaugeinrichtung (235) verbunden ist.

5. Vorrichtung nach Anspruch 1 bis 4, dadurch gekennzeichnet, dass die Halterung (125) für die Filterpatrone (80) an der Bodenplatte (22) des Filtergehäuses (20) aus einem in einer Durchbrechung (29) in der Bodenplatte (22) des Filtergehäuses (20) angeordneten, rohrförmigen Haltestutzen (126) besteht, der etwa mittig mit dem umlaufenden Rand (29a) der Durchbrechung (29) in der Filtergehäusebodenplatte (22) fest verbunden ist und der mit je einem Haltestutzenabschnitt (126a, 126b) in dem Innenraum (28) und ausserhalb des Filtergehäuses (20) liegt, wobei der ausserhalb liegende Haltestutzenabschnitt (126b) mit dem Wasserablaufstutzen (25) verbunden ist und der innenliegende Haltestutzenabschnitt (126a) in die mit einer mittigen Durchbohrung (81) versehene Filterpatrone (80) eingreift, wobei die Filterpatronen-Durchbohrung (81) obenseitig mittels eines stopfenartigen Formkör

pers (85) verschlossen ist, der in der oberen Öffnung der Durchbohrung (81) fest oder lösbar, vorzugsweise mittels einer Deckelplatte (86) angeordnet ist.

6. Vorrichtung nach Anspruch 1 bis 5, dadurch gekennzeichnet, dass der Haltestutzen (126) aus einem elastischen Kunststoff besteht und aussenwandseitig ein rippenartiges Rastprofil (127) aufweist.

7. Vorrichtung nach Anspruch 1 bis 6, dadurch gekennzeichnet, dass die Flüssigkeitsstandsmesseinrichtung (90) aus zwei unterschiedliche Längen aufweisenden Messelektroden (91, 92) für eine Maximum- und eine Minimum-Flüssigkeitsstandsmessung und einer Referenzelektrode (93) besteht, wobei alle drei Messelektroden (91, 92, 93) an der Abdeckplatte (30) des Filtergehäuses (20) angeordnet und in einem Steuerwerk (100) zusammengeführt sind, über das die Steuerventile (27, 42, 150) für die Wasserzufuhr zu der Wasserstrahlpumpe (40), für die Zufuhr des mit Schadstoffen beladenen Wassers zu dem Filtergehäuse (20) der Vorrichtung (10) und für den Flüssigkeitsablauf aus dem Filtergehäuse (20) gesteuert werden.

8. Vorrichtung nach Anspruch 1 bis 7, dadurch gekennzeichnet, dass der Vorfilter (60) als Filtersack ausgebildet ist.

9. Vorrichtung nach Anspruch 1 bis 8, dadurch gekennzeichnet, dass das Schwimmerventil (70) an der Abdeckplatte (30) in einem Abstand von dem Vorfilter (60) angeordnet ist.

10. Vorrichtung nach Anspruch 1 bis 9, dadurch gekennzeichnet, dass die Abdeckplatte (30) des Filtergehäuses (20) und/oder das Filtergehäuse (20) mit seiner Bodenplatte (22) und/oder die Trägerplatte (50) aus einem Kunststoff oder einem keramischen Werkstoff besteht.

11. Vorrichtung nach Anspruch 1 bis 10, dadurch gekennzeichnet, dass der Vorfilter (60) mit Poren von etwa 1 bis 2 mm Durchmesser versehen ist.

12. Vorrichtung nach Anspruch 1 bis 11, dadurch gekennzeichnet, dass als Filterpatrone (80) ein Fabrikat vom Typ AMF-Cuno-Micro-Clean 2278-B2 mit Melaminbinder und Cellulosefiber bei 5 Micrometer Filterungsfeinheit verwendet wird.

13. Vorrichtung nach Anspruch 1 bis 12, dadurch gekennzeichnet, dass in der ersten Zuführungsleitung (133) und oberhalb der Einmündung der zweiten Zuführungsleitung (233) ein Magnetventil (150) und oberhalb diesem ein rohrförmiger Behälter (151) angeordnet ist, der in seinem Innenraum (152) eine Schwimmerkugel (153) enthält, vermittels der verhindert wird, dass Luft durch das Speibecken (135) angesogen wird, wenn die Speichel- und Bohrwasser-Absaugeinrichtung (235) in Betrieb ist, wobei bei geöffnetem Magnetventil (43) in der Wasserzuführungsleitung (41) zu der Wasserstrahlpumpe (40) das Magnetventil (150) in der ersten Zuführungsleitung (133) geöffnet ist, wobei im Bereich des Behälters (151) eine Maximum-Füllstandsmesselektrode (191) und unterhalb des Behälters (151) eine Minimum-Füllstandsmesselektrode (192) sowie eine unter dieser liegende Referenzelektrode (193) angeordnet sind, die in dem Steuerwerk (100) zusammengeführt sind.

14. Vorrichtung nach Anspruch 1 bis 13, dadurch gekennzeichnet, dass das Filtergehäuse (20) mit einer Halterung zur Befestigung an einer zahnärztlichen Behandlungseinheit versehen ist.

15. Vorrichtung nach Anspruch 1 bis 14, dadurch gekennzeichnet, dass das oben offene Filtergehäuse (20) oberhalb der eingehängten Trägerplatte (50) mit einem Innengewinde (32) zur wechselweisen Aufnahme der mit einem Aussengewinde (31) versehenen Abdeckplatte (30) oder einem mit einem Aussengewinde (131) versehenen Verschlussdeckel (130) versehen ist.

16. Vorrichtung nach Anspruch 1 bis 15, dadurch gekennzeichnet, dass der frei aus der Bodenplatte (22) des Filtergehäuses (20) herausragende Abschnitt (126b) des Haltesstutzens (126) mit einem aufsteckbaren, einsteckbaren oder aufschraubbaren Verschlussstopfen (129) verschliessbar ist.

17. Vorrichtung nach Anspruch 1 bis 16, dadurch gekennzeichnet, dass der Wasserablaufstutzen (25) als Halterung (125) ausgebildet ist.


## Claims

1. Device for receiving particulate pollutants and for separating water and particulate pollutants, in particular pollutants containing metal compounds such as mercury compounds and the like occurring in dentists' surgeries as are to be found in the drilling sludge of dental filling materials or the like, in which the device is connectable to a first water supply pipe (133) and a water drain pipe (26), and a preferably cylindrical, sealed and replaceable filter housing (20) with a preliminary filter (60) and a filter cartridge (80), an upper cover plate (30) detachably secured to the filter housing with a feed connection (33) connected to the first supply pipe (133) for supplying the water containing pollutants, particularly patients' mouth rinsing water or drilling water aspirated from the mouths of patients, as well as a base plate (22) with a water draining connection (25) which is connectable to the water drain pipe (26), characterized in that the upper cover plate is provided with a suction connection (34) which, via a suction pipe (35), is connected to a vacuum generating facility such as a vacuum pump (36), in that, underneath the cover plate (30), within the interior (28) of the filter housing (20), a supporting plate (50) is disposed which, below the aperture (33a) of the feed connection (33) located in the cover plate inner wall surface (37), is provided with a first perforation (51) and, below the aperture (34a) of the suction connection (34) located in the cover plate inner wall surface (37), is provided with a second perforation (52), the first perforation (51) being dimensioned so as to be larger than the supply connection aperture (33a), and in that the circumferential rim (51a) delimiting the first perforation (51) is sealed by means of a sealing ring, such as a toroidal sealing ring or the like (53) relative to the cover plate inner wall surface (37), in that the preliminary filter (60) is secured to the supporting plate (50) below the first perforation (51) and is detachably connected to said supporting plate, in that, below the second perforation (52), there is connected a safety valve (70) preferably constructed in the form of a float valve for preventing the aspiration of liquid issuing from the preliminary filter (60), in that the filter cartridge (80) is arranged on the base plate (22) within the area of the aperture (25a) of the water draining connection (25) terminating within the filter housing interior with the aid of a mounting means (125), in that the water draining connection (25) is connected to the suction connection of a suction pump (40), the pressure connection of which terminates in the waste water drain pipe (26), and in that, within the interior (28) of the filter housing (20), a liquid level measuring means (90) for maintaining a constant liquid level is disposed above the filter cartridge (80).

2. Device according to the Claim 1, characterized in that the suction pump (40) is constructed in the form of a water jet vacuum pump which communicates with a water supply pipe (41), while a check valve (27) is disposed in the water draining connection (25) of the filter housing (20).

3. Device according to the Claims 1 and 2, characterized in that the first supply pipe (133) is connected to a spitting bowl (135) with flushing means.

4. Device according to the Claims 1 to 3, characterized in that, to the first feed pipe (133), a second feed pipe (233) is connected that communicates with a suction means (235) for saliva and drilling water.

5. Device according to the Claims 1 to 4, characterized in that the mounting means (125) of the filter cartridge (80) on the base plate (22) of the filter housing (20) consists of a tubular retaining connection mounted inside a perforation (29) in the base plate (22) of the filter housing (20) which is rigidly connected approximately concentrically to the circumferential rim (29a) of the perforation (29) in the filter housing base plate (22) and which is located with one retaining connection section each (126a, 126b) within the interior (28) of and without the filter housing (20), in which the outwardly located retaining connection section (126a) is connected to the water draining connection (25) and the inwardly located retaining connection section (126a) engages into the filter cartridge (80) provided with a concentric perforation (81), the filter cartridge perforation (81) being closed on the top side by means of a plug-like shaped body (85) which is, in the top aperture of the perforation (81), fixedly or detachably disposed, preferably by means of a cover plate (86).

6. Device according to the Claims 1 to 5, characterized in that the retaining connection (126) is fabricated from a resilient plastic material and, on the outer wall side, possesses a rib-like, notched profile (127).

7. Device according to the Claims 1 to 6, characterized in that the liquid level measuring means (90) consists of two measuring electrodes possessing different lengths (91, 92) for a maximum and a minimum liquid level measurement and of a reference electrode, in which all three measuring electrodes (91, 92, 93) are mounted on the cover plate (30) of the filter housing (20) and are combined within a control unit (100), by means of which the control valves (27, 42, 150) for the water supply to the water jet vacuum pump (40), for the supply of the water charged with pollutants to the filter housing (20) of the device (10) and for the draining of the liquid from the filter housing (20) are controlled.

8. Device according to the Claims 1 to 7, characterized in that the preliminary filter (60) is constructed in the form of a filtering bag.

9. Device according to the Claims 1 to 8, characterized in that the float valve (70) is mounted on the cover plate (30) at a distance from the preliminary filter (60).

10. Device according to the Claims 1 to 9, characterized in that the cover plate (30) of the filter housing (20) and/or the filter housing (20) with its base plate (22) and/or the supporting plate (50) is fabricated from a plastic or ceramic material.

11. Device according to the Claims 1 to 10, characterized in that the preliminary filter (60) is provided with pores having a diameter of approximately 1 to 2 mm.

12. Device according to the Claims 1 to 11, characterized in that, as filter cartridge, a product of the type AMF-Cuno-Micro-Clean 2278-B2 with a melamine agglutinant and cellulosic fiber of a filtering fineness of 5 micrometers is employed.

13. Device according to the Claims 1 to 12, characterized in that, in the first feed pipe (133) and above the termination of the second feed pipe (233), a solenoid valve (150), and above the latter, a tubular container (151) is disposed which, in its interior, contains a floating sphere (153) with the aid of which it is prevented that air is aspirated through the spitting bowl (135) when the saliva and drilling water suction means (235) is in operation, in which, when the solenoid valve (43) is open in the water supply pipe (41) leading to the water jet vacuum pump (40), the solenoid valve (150) in the first feed pipe (133) is open, in which, within the area of the container (151), a maximum liquid level measuring electrode (191) and, underneath the container (151), a minimum liquid level measuring electrode (192) as well as a reference electrode (193) located below the latter are disposed, which are combined within the control unit (100).

14. Device according to the Claims 1 to 13, characterized in that the filter housing (20) is provided with a mounting means for attachment to a dental treatment unit.

15. Device according to the Claims 1 to 14, characterized in that the filter housing (20) which is open at the top, above the supporting plate (50) suspended therein, is provided with an internal thread (32) for the alternate accommodation of the cover plate (30) provided with an external thread (31) or with a closure cover (130) provided with an external thread (131).

16. Device according to the Claims 1 to 15, characterized in that the section (126b) of the retaining connection (126) which projects freely from the base plate (22) of the filter housing (20) can be sealed with a blanking plug which may be fitted onto, inserted into or screwed onto said section.

17. Device according to the Claims 1 to 16, characterized in that the water draining connection (25) is constructed in the form of a mounting means (125).

## Revendications

1. Dispositif pour recevoir et pour séparer des polluants en forme de particules, en particulier des polluants en forme de particules contenant des composés métalliques, tels que les composés à base de mercure ou équivalents, contenus dans la fange de forage des matériaux de plombage ou équivalents, notamment dans les cabinets dentaires, le dispositif pouvant être raccordé à une première conduite d'amenée d'eau (133) et à une conduite d'évacuation des eaux usées (26) et présentant une carcasse de filtre (20), de préférence cylindrique, fermée et remplaçable, avec un premier filtre (60) et une cartouche filtrante (80), une plaque de recouvrement (30) supérieure reliée de manière amovible à la carcasse de filtre avec une tubulure d'amenée (33) reliée à la première conduite d'amenée (133) pour l'amenée d'eau contenant des polluants, en particulier d'eau de rinçage de la bouche des patients ou d'eau de travail aspirée de la bouche du patient, ainsi qu'une plaque de fond (22) avec une tubulure d'évacuation de l'eau (25), qui peut être raccordée à la conduite d'évacuation des eaux usées (26), caractérisé en ce que la plaque de recouvrement supérieure présente une tubulure d'aspiration (34) qui est reliée à un dispositif d'obtention du vide, comme une pompe à vide (36) par une conduite d'aspiration (35), qu'une plaque de support (50) est placée dans l'espace intérieur (28) de la carcasse de filtre (20) au-dessous de la plaque de recouvrement (30), plaque de support qui présente une première découpure (51) au-dessous de l'orifice (33a) de la tubulure d'amenée (33) dans la surface de la paroi intérieure de la plaque de recouvrement (37) et une deuxième découpure (52) au-dessous de l'orifice (34a) de la tubulure d'aspiration (34) dans la surface de la paroi intérieure de la plaque de recouvrement (37), la première découpure (51) étant dimensionnée de façon à être plus grande que l'orifice (33a) de la tubulure d'amenée et le bord périphérique (51a) limitant la première découpure (51) étant étanché en direction de la surface de la paroi intérieure de la plaque de recouvrement (37) au moyen d'un anneau d'étanchéité, tel qu'un anneau torique ou équivalent (53), que le premier filtre (60) est raccordé à la plaque de support (50) au-dessous de la première découpure (51) et qu'il est relié à la plaque de support de manière amovible, qu'une soupape de sûreté (70), configurée de préférence comme une soupape à flotteur, est raccordée au-dessous de la seconde découpure (52) pour empêcher l'aspiration du liquide sortant du premier filtre (60), que la cartouche filtrante (80) est placée sur la plaque de fond (22) dans la zone de l'orifice (25a) de la tubulure d'évacuation de l'eau (25) débouchant dans l'espace intérieur de la carcasse de filtre au moyen d'une fixation (125), que la tubulure d'évacuation de l'eau (25) est reliée à la tubulure d'aspiration d'une pompe d'aspiration (40), dont le tuyau de refoulement aboutit dans la conduite d'évacuation des eaux usées (26), et qu'un dispositif de mesure du niveau de liquide (90) est placé dans l'espace intérieur (28) de la carcasse de filtre (20) pour maintenir un niveau de liquide constant au-dessus de la cartouche filtrante (80).

2. Dispositif selon la revendication 1, caractérisé en ce que la pompe d'aspiration (40) est configurée comme une pompe soufflante qui est en relation avec une conduite d'amenée de l'eau (41), une soupape de non-retour (27) étant placée dans la tubulure d'évacuation de l'eau (25) de la carcasse de filtre (20).

3. Dispositif selon les revendications 1 et 2, caractérisé en ce que la première conduite d'amenée (133) est reliée à un crachoir (135) avec chasse d'eau.

4. Dispositif selon les revendications 1 à 3, caractérisé en ce qu'une deuxième conduite d'amenée (233) est raccordée à la première conduite d'amenée (133), deuxième conduite d'amenée qui est reliée à un dispositif d'aspiration de salive et d'eau de forage (235).

5. Dispositif selon les revendications 1 à 4, caractérisé en ce que la fixation (125) de la cartouche filtrante (80) sur la plaque de fond (22) de la carcasse de filtre (20) est constituée par une tubulure de soutien (126) tubulaire placée dans une découpure (29) de la plaque de fond (22) de la carcasse de filtre (20), tubulure de soutien qui est reliée de manière fixe, à peu près en son milieu, au bord périphérique (29a) de la découpure (29) de la plaque de fond (22) de la carcasse de filtre et qui se situe avec une portion de tubulure de soutien (126a, 126b) respectivement dans l'espace intérieur (28) et à l'extérieur de la carcasse de filtre (20), la portion de tubulure de soutien (126b) qui se situe à l'extérieur étant reliée à la tubulure d'évacuation de l'eau et la portion de la tubulure de soutien (126a) qui se situe à l'intérieur s'engrenant dans la cartouche filtrante (80) pourvue d'une découpure centrale (81), la découpure de la cartouche filtrante (81) étant obturée sur sa face supérieure au moyen d'un corps moulé (85) du type bouchon, qui est placé dans l'orifice supérieur de la découpure (81) de manière fixe ou amovible, de préférence au moyen d'une plaque de couvercle (86).

6. Dispositif selon les revendications 1 à 5, caractérisé en ce que la tubulure de soutien (126) est constituée par une matière plastique élastique et qu'elle présente, sur sa face de paroi extérieure, un profil de crantage (127) du type nervure.

7. Dispositif selon les revendications 1 à 6, caractérisé en ce que le dispositif de mesure du niveau de liquide (90) est constitué par deux électrodes de mesure (91, 92) présentant des longueurs différentes pour une mesure du niveau de liquide maximum et une mesure du niveau de liquide minimum et par une électrode de référence (93), les trois électrodes de mesure (91, 92, 93) étant placées sur la plaque de recouvrement (30) de la carcasse de filtre (20) et étant réunies dans un organe de commande (100) qui commande les vannes-pilotes (27, 42, 150) pour l'amenée de l'eau à la pompe soufflante (40), pour l'amenée de l'eau chargée de polluants à la carcasse de filtre (20) du dispositif (10) et pour l'évacuation du liquide provenant de la carcasse de filtre (20).

8. Dispositif selon les revendications 1 à 7, caractérisé en ce que le premier filtre (60) est configuré comme un filtre à sacs.

9. Dispositif selon les revendications 1 à 8, caractérisé en ce que la soupape à flotteur (70) est placée sur la plaque de recouvrement (30) à une certaine distance du premier filtre (60).

10. Dispositif selon les revendications 1 à 9, caractérisé en ce que la plaque de recouvrement (30) de la carcasse de filtre (20) et/ou la carcasse de filtre (20) et sa plaque de fond (22) et/ou la plaque de support (50) est constituée par une matière plastique ou une matière céramique.

11. Dispositif selon les revendications 1 à 10, caractérisé en ce que le premier filtre (60) est pourvu de pores d'un diamètre de 1 à 2 mm.

12. Dispositif selon les revendications 1 à 11, caractérisé en ce qu'un produit du type AMF-Cuno-Micro-Clean 2278-B2 avec liant de mélamine et fibre de cellulose est utilisé comme cartouche filtrante (80) pour une finesse de filtration de 5 micromètres.

13. Dispositif selon les revendications 1 à 12, caractérisé en ce qu'une vanne magnétique (150) est placée dans la première conduite d'amenée (133) et au-dessus de l'embouchure de la seconde conduite d'amenée (233) et qu'un récipient (151) en forme de tuyau est placé au-dessus de cette vanne magnétique, récipient qui contient, dans son espace intérieur (152), un flotteur sphérique (153) au moyen duquel on évite que de l'air soit aspiré par le crachoir (135) lorsque le dispositif d'aspiration de salive et d'eau de forage (235) est en service, la vanne magnétique (150) de la première conduite d'amenée (133) étant ouverte, lorsque la vanne magnétique (43) est ouverte dans la conduite d'amenée de l'eau (41) vers la pompe soufflante (40), une électrode de mesure du niveau maximum (191) étant placée dans la zone du récipient (151), une électrode de mesure du niveau minimum (192) étant placée au-dessous du récipient (151) et une électrode de référence (193) étant placée au-dessous de cette dernière, électrodes qui sont réunies dans un organe de commande (100).

14. Dispositif selon les revendications 1 à 13, caractérisé en ce que la carcasse de filtre (20) est équipée d'une attache pour la fixation à une unité de traitement dentaire.

15. Dispositif selon les revendications 1 à 14, caractérisé en ce que la carcasse de filtre (20), ouverte vers le haut, est équipée au-dessus de la plaque de support (50) suspendue d'un filet intérieur (32) pour la prise en alternance de la plaque de recouvrement (30) équipée d'un filet extérieur (31) ou d'un couvercle obturateur (130) équipé d'un filet extérieur (131).

16. Dispositif selon les revendications 1 à 15, caractérisé en ce que la portion (126b) de la tubulure de soutien (126) qui fait saillie librement de la plaque de fond (22) de la carcasse de filtre (20) peut être fermée par un bouchon obturateur (129) qui peut être rapporté, emboîté ou vissé.

17. Dispositif selon les revendications 1 à 16, caractérisé en ce que la tubulure d'évacuation de l'eau (25) est configurée comme fixation (125).

FIG.1

FIG.2

FIG.3

34    91a    33    92a    30d

93a    30

31    30a
30b

37

91

92

93

FIG.4

30

34    33

FIG.5

37

34    33

34a    33a

53

30

FIG.6

FIG.7

FIG.8

FIG.9

FIG.10

FIG.11

FIG.12

FIG.13

FIG.14

FIG.15

FIG.16

FIG.17

FIG.18

FIG.19

129

FIG.20

129

FIG.21

129

FIG.22

129

FIG.23

x3   x2

135

191

151

152

192

153

x2

x3

x1

235

193

150

233

133